# EUROPEAN PATENT SPECIFICATION

(11) **EP 4 085 764 B1**
(45) Date of publication and mention of the grant of the patent: **06.11.2024**
(21) Application number: 22171418.1
(22) Date of filing: 22.01.2019
(51) Int. Cl.: A01K 63/10, B63B 59/08, B63B 59/10, B08B 1/00

(54) **ROTATABLE BRUSH FOR CLEANING A SUBMERGED NET**
DREHBARE BÜRSTE ZUM REINIGEN EINES UNTERGETAUCHTEN NETZES
BROSSE ROTATIVE POUR NETTOYER UN FILET IMMERGÉ

(30) Priority: 25.01.2018 NO 20180118; 28.08.2018 NO 20181124
(43) Date of publication of application: 09.11.2022
(62) Divisional of application: 19743883.1
(73) Proprietor: Aqua Robotics AS, 4344 Bryne (NO)
(72) Inventor: Molaug, Anders, 4347 Lye (NO); Molaug, Ole, 4345 Bryne (NO); Aamodt, Harald, 4352 Kleppe (NO); Molaug, Knut, 4340 Bryne (NO)
(74) Representative: Håmsø Patentbyrå AS

(56) References cited:
- WO-A1-2015/126261
- CA-A1- 2 260 560
- GB-A- 2 257 350
- US-A- 4 030 440
- US-A- 5 930 862
- US-A1- 2007 209 126

## Description

The invention relates to a rotatable brush for cleaning a submerged net, for example a net belonging to a fish-farming cage. More specifically, the invention relates to a cleaning device with rotatable brushes.

The rotatable brushes are passive and without a dedicated motor for driving the brushes. The brushes are brought to rotate by being moved across and in contact with the surface that is to be cleaned. Preferably, the cleaning device is moved across the surface in a vertical direction by the cleaning device preferably being lowered and hoisted by means of a winch which is positioned above a water surface. More specifically still, the cleaning device includes one or more brushes having rotational axes that are slanted relative to a direction in which the cleaning device is being moved. In addition, the cleaning device may include one or more rotatable brushes that are transverse relative to the direction in which the cleaning device is being moved. More specifically still, the rotatable brushes are pivotably attached and pivotable around axes perpendicular to the rotational axes of the brushes.

### Background of the invention

For fish-farming, floating cages can be used. A so-called open cage includes, among other things, a floating body encircling an enclosure for the fish. The enclosure may comprise a net. The net is closed at the bottom. The water flows freely through the net. The fish is dependent on the water within the net being replaced by flow-through, for the oxygen content of the water to be satisfactory. Over time, the net will become covered in fouling, and the water flow decreases. The oxygen content inside the cage will therefore decrease, which is unfavourable for the well-being, health and growth of the fish.

It is known to use so-called cleaner fish in cages to combat external crustacean parasites on the fish. The salmon louse is one example of such a parasite. It is favourable to keep the net clean of fouling to have the best effect of the cleaner fish. The cleaner fish will feed on fouling and, therefore, will not eat salmon lice so actively when the net is fouled.

It is known in the trade to treat nets that are used for cages with impregnating agents to prevent fouling. Such impregnating agents are toxic in nature. Known impregnating agents comprise cupriferous impregnating agents. It is also known that such nets must be sent to special washing facilities for cleaning and re-impregnation. This is extensive work which includes, *inter alia,* mobilizing a boat with a crane to be able to lift the net out of the sea and to put the net back into the sea.

An alternative to washing and impregnating the nets is cleaning the nets *in situ* in the water.

Patent document US 2011/0185519 discloses a device for cleaning a submerged net, especially a net in a fish cage. The device is operated from a surface vessel. The device includes a rectangular or square chassis which is arranged to slide across the net. The device includes buoyancy bodies which are placed within the frame, a propulsion means for the device to be movable along the net, a propeller for keeping the device close to and in contact with the net, and a cleaning means. The cleaning means may include a suction device integrated in the chassis, or a high-pressure washer. In addition, the device may be provided with brushes. The propulsion device may comprise hydraulically driven toothed sprockets. The propeller may be driven hydraulically. The buoyancy body is adapted for the device to have a negative buoyancy of about 10 kg in a fully submerged position.

Patent document EP 2251102 discloses another device for cleaning a submerged net. The device is a device running on wheels and being securely held from the surface. Energy is supplied from the surface through a cable, and pressurized liquid is supplied from the surface through a hose. Cleaning is performed by high-pressure washing the net.

Patent document WO 2015/005801 discloses an autonomous device for cleaning a submerged net. The device comprises wheels for propulsion across the net, a propeller for positioning the device against the net, rotating brushes for cleaning, buoyancy means and a battery for energy supply. It is also known to use devices provided with tracks as an alternative to wheels.

Patent document NO 20160538 discloses a cleaning device comprising a chassis provided with several rotating discs for cleaning submerged nets. Water under high pressure is carried up to the centre of each rotating disc. Each disc has channels from its centre out to the circumference of the disc. The channel ends in a slanted nozzle so that the disc is brought to rotate when water under high pressure is flowing out of the nozzle opening. Patent document US 2012/0260443 discloses a cleaning device comprising a frame provided with several rotating discs for cleaning a net. At their circumferences, the discs are provided with finger-shaped hooks which grip around the net structure and loosen impurities. A substantial drawback of this solution is the fact that the hooks give a considerable mechanical strain on the net structure.

The applicant's own patent application NO 20161527 describes a cleaning device including at least one brush passively rotating on the net wall, the rotational axis being perpendicular to the direction of motion. The cleaning device is lifted and lowered by means of a winch on the surface.

CA 2 260 560 A1 and WO 2015/126261 A1 disclose each a rotatable brush according to the preamble of claim 1.

Some of the known devices have the drawback, among others, of having to be operated from the surface, from a workboat. The workboat preferably has a crane. Because of the work in mobilizing a boat and crew, cleaning will not be carried out until the fouling has become relatively extensive. Devices including the use of water under high pressure are known to give heavy wear on the nets, whereas gentle devices may have low capacity. There is therefore a need for a device that can clean the net in a gentle manner regularly and before the fouling has become extensive.

The invention has for its object to remedy or reduce at least one of the drawbacks of the prior art or at least provide a useful alternative to the prior art.

The object is achieved through the features that are specified in the claims that follow.

### General description of the invention

The invention is defined by the independent claim. The dependent claims define advantageous embodiments of the invention.

The invention relates to a rotatable brush for cleaning a submerged net, according to claim 1.

By a submerged surface may be understood, in this connection, an enclosure for farmed fish, for example a net that is submerged in water. The net may form a net wall which may be vertical or sloping. In what follows, the submerged surface will be referred to as a net. The net may form a net wall which may be vertical or sloping. The net wall may be provided with threads arranged vertically and horizontally.

A rotatable brush, technically also referred to as a roller brush, has the advantage of the rotatable brush rolling across the net, thereby loosening impurities that have attached to the net, for example algal growths. By the brush rolling on the net, a passive and gentle cleaning of the net is achieved with minimal strain on the net and with minimal whirling-up of impurities.

Rotation of the rotatable brush may be provided by the rotatable brush rolling across a supporting face, for example a net. Rotation of the rotatable brush may be provided by the rotatable brush being connected to a driving means, for example a motor. A driven rotatable brush may be given a rotational speed that is independent of the relative motion of the brush against the supporting face.

The first axis of the cleaning device substantially coincides with the direction of motion of the cleaning device, and, in the position of application of the cleaning device, the first axis is, in the main, parallel to the net wall. Currents in the water may cause some motion in the net, so that a net wall that is normally vertical may become slanted.

The cleaning device is arranged to be lifted and lowered by means of a winch on the surface. The cleaning device may clean the net wall when moving downwards as well as when moving upwards along the net wall. The cleaning device may include at least one movable wing arranged to push the cleaning device against the wall when the cleaning device is moving both downwards and upwards along the net wall.

Tests, which have been carried out by the applicant, show that a slanted brush as described herein may give a substantially better cleaning effect than a transverse brush with a rotational axis that is perpendicular to the first axis. The better cleaning effect is achieved in that the slanted brushes clean both the horizontal threads and the vertical threads in the net when the brush is rolling along the net wall. Tests show, among other things, that a cleaning device including two transverse brushes can give a 40 per cent cleaning effect after 336 passes. A cleaning device with a plurality of slanted brushes may give an 80 per cent cleaning effect after 40 passes and 100 per cent cleaning effect after 80 passes.

The cleaning device may include a first brush pair arranged in a V-shape. Two slanted brushes in a V-shape have the advantage of lateral forces due to the rotation of the slanted brushes being equalized, and of the cleaning device moving more stably along the net wall in a vertical direction. One slanted brush, or possibly two parallel slanted brushes, may lead to the brushes pulling the cleaning device sideways when the brushes are rolling on the net wall.

The cleaning device may further include a second brush pair arranged in a V-shape. This has the advantage of two brush pairs arranged in V-shapes being able to further increase the stability sideways while, at the same time, the cleaning effect will be the same whether the cleaning device is moving upwards or downwards on the net wall.

The second brush pair may be laterally inverted around the second axis relative to the first brush pair. This has the advantage of the lateral inversion of the positioning of the brushes giving a symmetric design which contributes to an optimum cleaning effect whether the cleaning device is moving upwards or downwards on the net wall. A laterally inverted positioning will also give very good directional stability when the cleaning device is rolling across the net wall.

The two brush pairs may be arranged in an X-shape or as a parallelogram. A parallelogram is considered the most space-efficient. The cleaning effect can be influenced by changing the mutual angle of the brushes.

The second end portion of the cleaning device may include a bottom brush. The second end portion faces downwards in the net when the cleaning device is in a normal operative position. The bottom brush is particularly favourable when the cleaning device is used in a so-called coned net. In a coned net, there may be too little space at the bottom of the net for the entire cleaning device. By giving the second end portion of the cleaning device a tapering shape and providing the second end portion with a bottom brush, the bottom brush may clean the lowermost portion of the net which is not accessible to the rotatable brush pairs. The rotational axis of the bottom brush may be perpendicular to the first axis, or it may be so arranged that an angle is formed between the rotational axis and the first axis.

The cleaning device may include at least one scraper. This has the advantage of the scraper being arranged to give an extra cleaning of the net or the supporting face by scraping dirt that the rotatable brushes possibly have not managed to loosen off the surface. The at least one scraper additionally functions as a support and a spacer against the supporting face, thereby contributing to the cleaning device having a distance as constant as possible to the supporting face.

A portion of the scraper may be parallel to the rotational axis of a brush. This has the effect of saving space. One or more scrapers may be arranged parallel to the rotational axis and near the rotatable brush. By the scraper being arranged parallel to the rotatable brush, there will be no wedge between the brush and scraper in which fish or other objects in the water may become wedged. When four brushes are arranged in a parallelogram and there is a scraper arranged parallel to each of the four brushes, two paired scrapers will form a V-shape like a plough. When the cleaning device is pulled upwards along the net wall, the two uppermost scrapers can guide away larger impurities on the net wall in order thereby to increase the cleaning effect of the rotatable brushes. When the cleaning device is lowered downwards along the net wall, the lowermost scrapers will give a corresponding effect.

The scraper may include a fixed brush. This has the advantage of a fixed brush comprising bristles being more effective under some conditions than a stiff scraper of, for example, rubber or metal. When the fixed brush is moved along a perforated supporting face, for example a net, the perforated supporting face may induce a vibrating effect in the bristles, which increases the cleaning effect.

The rotatable brush may, in the main, be cylindrically shaped around the rotational axis.

The effect of a cylinder-shaped rotatable brush is that the rotational axis of the brush core may create a constant distance to the supporting face when the brush is rolling across the supporting face. A cleaning device provided with a rotatable brush as described herein may thereby provide a stable and even motion when the cleaning device is being moved along the supporting face. A constant distance to the supporting face is particularly important if the cleaning device is lifted and lowered vertically in a fish cage, for example by the use of a winch.

The rotatable brush may include at least one depth wheel.

This has the advantage of the depth wheel, which is arranged coaxially with the brush, giving the brush an even ground pressure against the net, and the depth wheel restricting the working depth of the brush; that is to say, how far through the net the bristle of the brush may go. The brush may be provided with alternative depth wheels of different diameters so that the working depth of the brush may be adapted to the supporting face, for example to the thread thickness and mesh of the net and to the fibre length of the bristle. A depth wheel of a small diameter is arranged to give a large working depth. A depth wheel of a large diameter is arranged to give a small working depth. The depth wheel may be replaceable for the working depth to be adapted to the supporting face, for example to the thread thickness and mesh of the net and to the length of the bristle. Further, the depth wheel, which is arranged coaxially with the brush core, may contribute to a more even ground pressure against the supporting face compared with a rotatable brush without a depth wheel.

Two depth wheels may be arranged axially, one on either side of the rotatable brush. The rotatable brush may include a middle portion with an attachment for pivotable attachment of the brush. The advantage of this is that by providing the brush with a centred pivotable attachment, the rotational axis of the brush may be pivoted so that the brush may better follow an uneven supporting face. By the pivotable attachment being at the centre of the brush, the brush may balance around the attachment and thereby roll in the easiest possible way on the supporting face.

The rotatable brush may include a middle portion with an attachment for a pivotable attachment of the brush.

The advantage of providing the brush with a centered pivotal attachment, is that the rotation axis of the brush can be rotated so that the brush can better follow an uneven supporting face. By having the pivotal attachment in the center of the brush, the brush can balance about the fastening and thereby roll most easily on the supporting surface.

The middle portion may include at least one depth wheel. The middle portion may include one or two depth wheels. To simplify the structure, the middle portion may be provided with just one depth wheel.

The second end portion of the cleaning device may be wedge-shaped.

A design like that has the advantage of enabling the cleaning device to be moved further down in a coned net than a cleaning device with an end portion of a rectangular shape.

The rotatable brush according to the invention includes a brush core with a rotational axis and a plurality of bristles, wherein the bristle is provided with an end portion with a free end and with an opposite attachment portion attached to the brush core. When the rotatable brush is rotated, the free end of the bristle moves along a circular circumferential path with the centre on the rotational axis. The end portion of the bristle forms a secant angle with the circumferential path, the secant angle being different from 90 degrees.

By a circular circumferential path may be understood, in this connection, a circumferential path associated with a single bristle. Bristles of different lengths may have circumferential paths of different radii.

In what follows, a bristle with a secant angle different from 90 degrees will be referred to as a bent bristle or a tangential bristle. By a submerged surface may be understood, in this connection, an enclosure for farmed fish, for example a net submerged in water. In what follows, the submerged surface will be referred to as a net.

When a bristle directed radially with a secant angle of 90 degrees penetrates the net, the straight bristle will, in the main, only touch the fronts and sides of the threads in the net. In this connection, the front may be understood as the surface facing the cleaning device.

The rotatable brush may comprise a plurality of radial bristles, and a number of bristles may deviate from a radial direction at their free end portions. When a radially directed bust penetrates the net, the straighten bristles will essentially only touch the front and side of the threads of the net. In this connection, the front may be understood as the surface facing the cleaning device. By giving bristles a deviating direction at their free end portions, for example in the form of a bend or a kink, the bristle may also work the back of the threads in the net.

Trials carried out by the applicant show that a rotatable brush with straight bristles may achieve a cleaning of the back of the threads in the net of 10 per cent as the maximum. By a straight bristle may be understood, in this connection, a bristle in which the end portion of the bristle is arranged radially to the rotational axis of the brush core, so that a secant angle of 90 degrees is formed between the end portion of the bristle and the circumferential path.

By giving the free end portion of the bristle a secant angle different from 90 degrees, for example of between 30 and 60 degrees, the bristle may also work the back of the treads in the net. According to said trials, a rotatable brush with a free end portion having a secant angle smaller or larger than 90 degrees may give a 100 per cent cleaning of the back of the threads in the net. The end portion arranged non-radially described herein is formed by giving the bristle a kink or a bend. The bend may extend to the free end of the bristle.

The rotatable brush includes bent bristles. The bent bristles may have identical or different bends and lengths in their free end portions.

One or more brushes may be arranged in a cleaning device. By a cleaning device may be understood, in this connection, a device including at least one rotatable brush, the cleaning device being arranged to be lifted and lowered along the net wall by means of a winch on the surface. The cleaning device may clean the net wall when moving downwards as well as when moving upwards along the net wall. In the main, the cleaning device usually moves along the vertical threads and transversely to the horizontal threads in the net. The attachment portion of the bristle may be arranged radially in the brush core.

The effect of an attachment portion arranged radially is that the strain on the attachment portion of the bristle will be the same, independently of the direction of rotation of the brush. Further, an attachment portion arranged radially makes it possible to arrange bristles having identical secant angles in a first direction of rotation and in a second direction of rotation, the bristles in opposite arrangement having circular circumferential paths of identical radii.

The attachment portion of the bristle may be arranged tangentially to the brush core.

According to an embodiment that does not form part of the invention, the effect of the attachment portion of the bristle being arranged tangentially to the brush core is that, with a straight bristle, a secant angle between the end portion of the bristle and the circumferential path that is different from 90 degrees can be achieved. A straight bristle as described herein has the advantage of being able to apply a greater force against the supporting face than a bent bristle, as a bent bristle will bend more easily than a straight bristle when the end portion of the bristle is subjected to a force component directed towards the attachment portion of the bristle.

The rotatable brush may include bristles of different types.

By different types may be understood, in this connection, bristles of different shapes, different cross sections, different lengths and different materials.

The effect of providing the rotatable brush with different types of bristles is that the cleaning effect can be adapted for the conditions. The rotatable brush may, for example, include a combination of long stiff bristles arranged for rough cleaning and soft short bristles for fine cleaning. The rotatable brush may include only bent bristles or a combination of straight and bent bristles. The bent bristles may have identical or different bends and lengths.

The various bristles may be arranged systematically, for example in a helical shape, or they may be arranged randomly on the rotatable brush. Bristles of different lengths may advantageously be arranged evenly distributed around the circumference so that the rotatable brush may roll evenly across the surface. The various bristles may be so arranged that the cleaning effect of the rotatable brush is independent of the direction of rotation. This can be achieved, for example, by arranging approximately equal numbers of bent bristles in a first direction of rotation and in a second direction of rotation.

The bristle may be formed from fibre, synthetic material or metal, or a combination of several materials. The cross section of the bristle may be circular, polygonal or elliptical. By providing the bristle with an elliptical or polygonal cross section, it is possible to give the bristle a directional stiffness. A stiff bristle with a polygonal cross section, for example square, may give a more aggressive cleaning than a soft bristle with a circular cross section.

In a cleaning device in which four brushes are arranged in a parallelogram or an X-shape, brushes with bent bristles may be arranged in such a way that the bristles of the first and second brush pairs are arranged in opposite directions. Thereby the cleaning effect will be the same whether the cleaning device is moving upwards or downwards on the net wall.

In what follows, an example of a preferred embodiment is described, which is visualized in the accompanying drawings, in which:
- Figure 1: shows a perspective view of a cleaning device according to the invention, in which the cleaning device is viewed from a side facing in towards a supporting face that is to be cleaned;
- Figure 2: shows a perspective view of the cleaning device seen from an opposite side to that in figure 1;
- Figure 3: shows a plan view of the side of the cleaning device facing in towards the supporting face that is to be cleaned;
- Figure 4: shows a side view of the cleaning device seen from the tapering end portion of the cleaning device;
- Figure 5: shows a side view of the cleaning device in a position of application on a supporting face that is to be cleaned;
- Figure 6: shows a schematic view of four rotatable brushes arranged in a parallelogram;
- Figure 7: shows a schematic view of four rotatable brushes arranged in an X-shape;
- Figure 8: shows, on a larger scale, a prior-art rotatable brush with straight bristles;
- Figure 9: shows a rotatable brush with bent bristles;
- Figure 10: shows a rotatable brush with kinked bristles;
- Figure 11: shows a rotatable brush with straight bristles with tangential attachment;
- Figure 12: shows a rotatable brush with different types of bristles; and
- Figure 13: shows, on a smaller scale, a schematic side view of a cleaning device with two rotatable brushes with bent bristles.

In the figures, the reference numeral 1A refers to a cleaning device according to the invention.

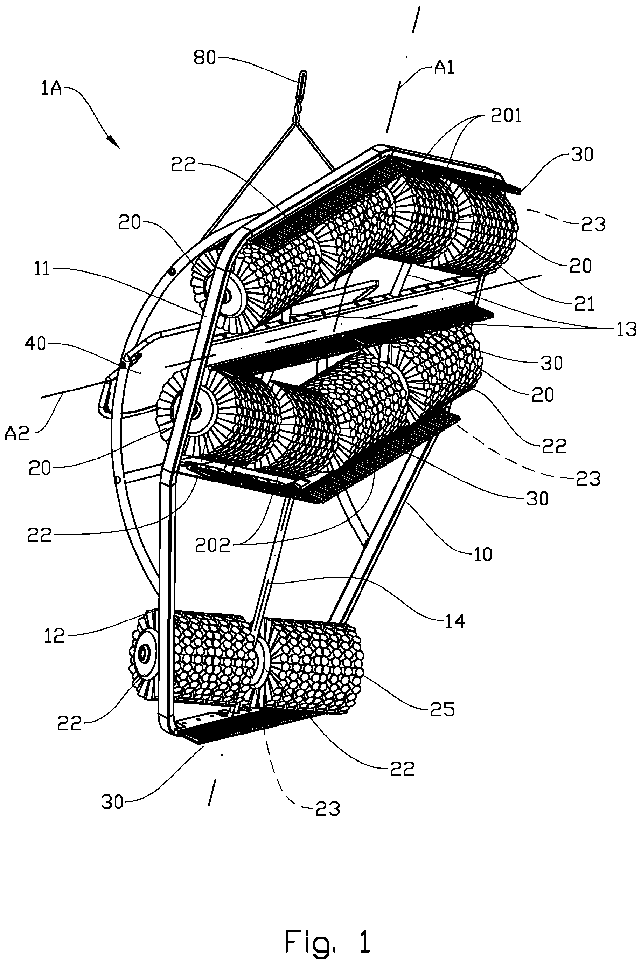

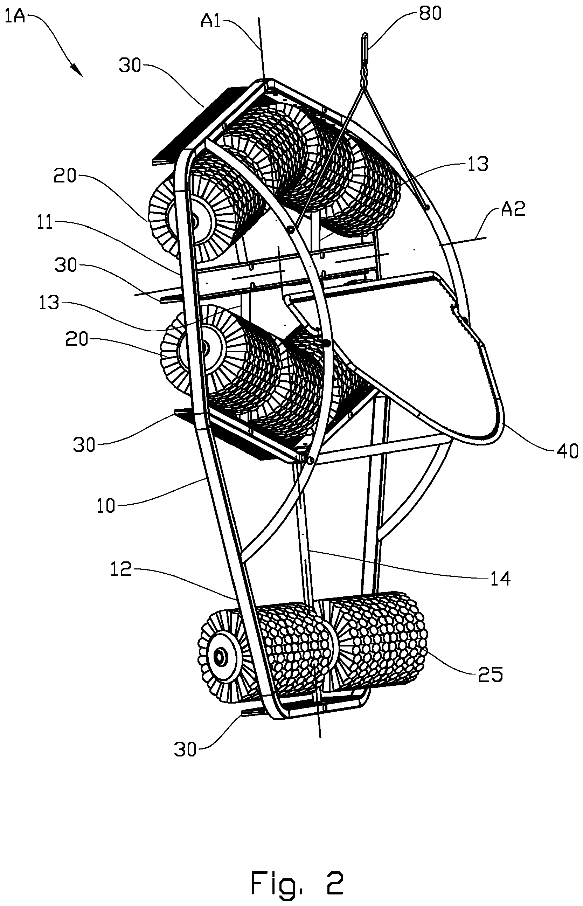

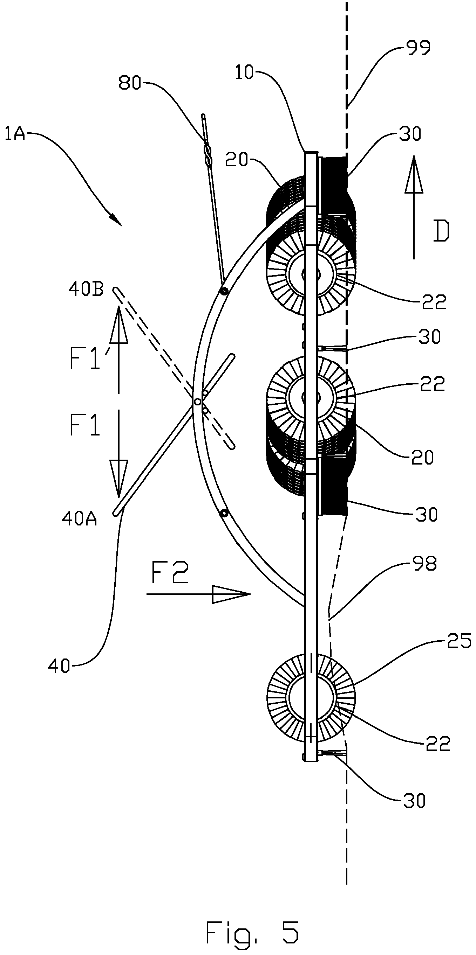

Figures 1 and 2 show perspective views of a first embodiment of a cleaning device 1A. The cleaning device 1A is shown with a frame 10. The cleaning device 1A forms a first end portion 11 and a second end portion 12. On the frame 10, a movable wing 40 is arranged. The movable wing 40 is shown articulated attached to the frame 10. The movable wing 40 is arranged to push the cleaning device 1A towards a submerged surface 99, referred to as a net wall in what follows, as shown in figure 5, when the cleaning device 1A is being moved along the net wall 99.

In the first end portion 11 of the cleaning device 1A, four rotatable brushes 20 are arranged. The brushes 20 are paired in a first brush pair 201 and a second brush pair 202. Each brush pair 201, 202 is arranged symmetrically around a first axis A1 extending from the first end portion 11 to the second end portion 12.

In the second end portion 12 of the cleaning device 1, a rotatable bottom brush 25 is arranged. By design, the bottom brush 25 is, in the main, identical to the rotatable brushes 20. The bottom brush 25 is so arranged that the rotational axis of the bottom brush may be perpendicular to the first axis A1.

The brushes 20, 25 include middle portions 21. The brushes are shown with four depth wheels 22. In the middle portion 21, a shaft portion 23 is arranged, which is pivotably attached to a rod 13, 14. Thereby the brushes 20, 25 can pivot around their supporting portions in the rods 13, 14. The cleaning device 1 further includes scrapers 30, shown in the figures as fixed brushes. At its first end portion 11, the cleaning device 1 is provided with a coupling 80. Via the coupling 80 and a rope or a wire (not shown), the cleaning device 1 may be hoisted and lowered along and on the net wall 99 by means of a winch (not shown).

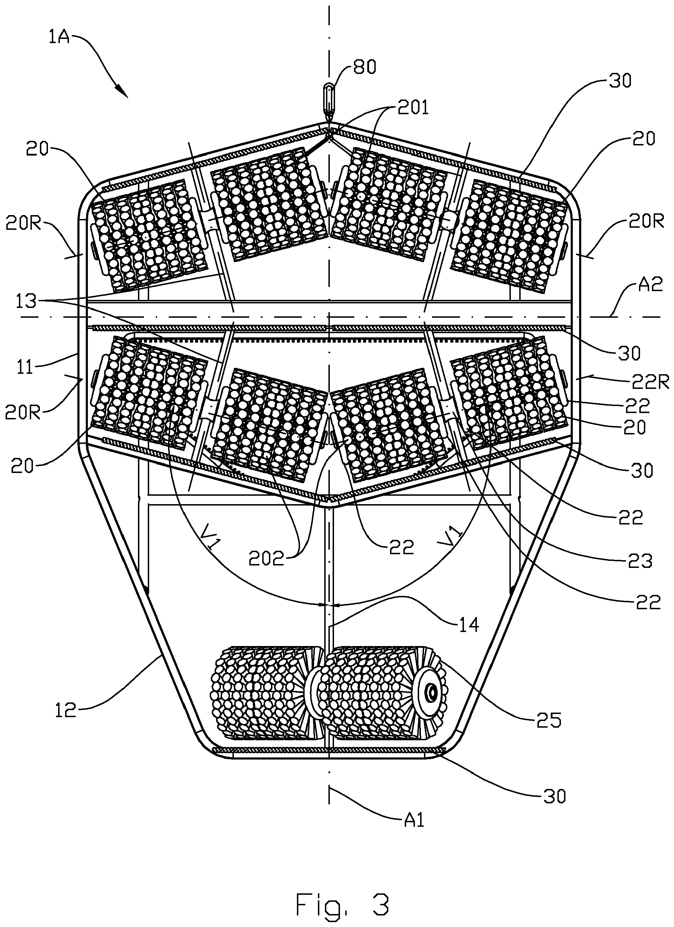

Figure 3 shows the cleaning device 1A from the side facing in towards the surface that is to be cleaned. The rotational axis 20R of the brushes 20 is slanted relative to the first axis A1. The rotational axis 20R and the axis A1 thereby form an angle V1. The first brush pair 201 and the second brush pair 202 are arranged symmetrically around a second axis A2, the second axis A2 being perpendicular to the first axis A1. In the figure, the brush pairs 201, 202 form a parallelogram.

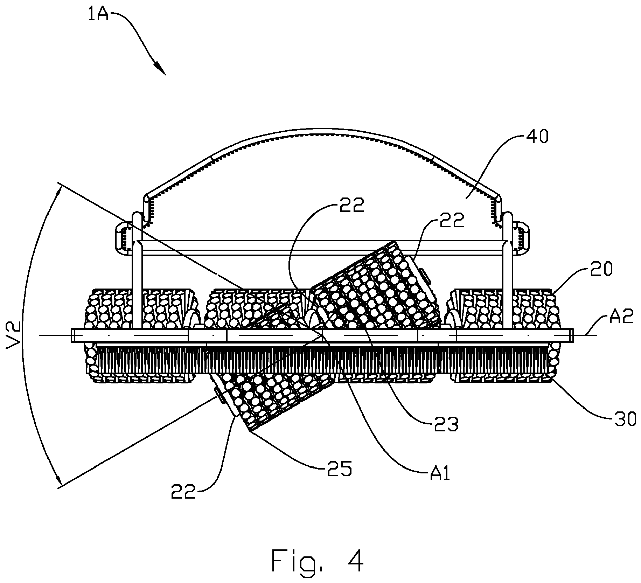

Figure 4 shows how the brushes 20, 25 can be pivoted around the pivotable attachment 23 within an angle V2, the angle V2 lying over and under a plane formed by the first axis A1 and the second axis A2. In figure 4, the bottom brush 25 is shown pivoted around the pivotable attachment 23, whereas the other brushes 20 have not been pivoted.

Figure 5 shows the cleaning device 1A in a working position on the net wall 99. The cleaning device 1A is pulled upwards in a direction D. When the cleaning device 1A is pulled in the direction D, the movable wing 40 will have a first position 40A which is shown in the figure. When the movable wing 40 is in the first position 40A, the movable wing 40 is subjected to a downward force F1 by the water flowing past the movable wing 40. The movable wing 40 applies a force F2 to the cleaning device 1A towards the net wall 99. The force F2 constitutes the ground pressure of the cleaning device 1A against a net wall 99 directed vertically. When the cleaning device 1A is being lowered downwards, the movable wing 40 will be pivoted and have a second position 40B, and a force F1' will be in the opposite direction to the force F1, so that the force F2 will be of approximately the same magnitude regardless of whether the cleaning device 1A is being moved up or down the net wall 99. It should be noted that the cleaning device 1A is shown provided with a movable wing 40. The person skilled in the art will know that a cleaning device 1A may be provided with several movable wings 40.

The scrapers 30 rest against the net wall 99, thereby restricting the working depth of the brushes 20, 25. In figure 5, it is shown that a portion of the net wall 99 forms a bulge 98. In the bulge 98, the working depth of the brush 25 is restricted by the depth wheel 22 arranged at the brush 25.

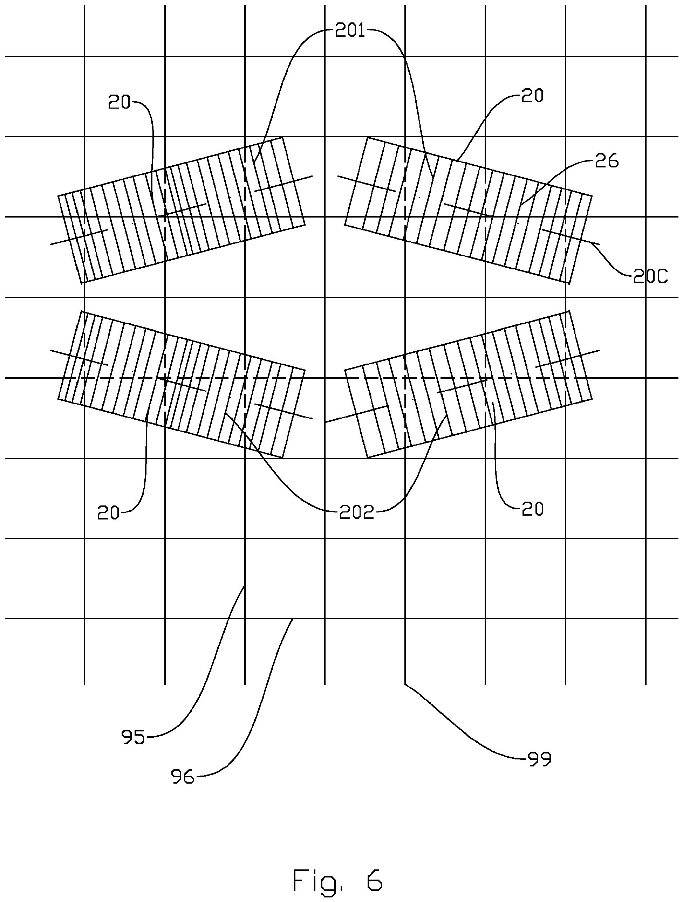

Figure 6 shows a principle drawing of a net 99 and four brushes 20 arranged in a parallelogram. The four brushes are divided into a first brush pair 201 and a second brush pair 202. By the brushes 20 being slanted, the bristles 26 will work the net 99 in several directions, thereby also cleaning both the threads 96 running in a first direction and the threads 95 running in a second direction in the net 99.

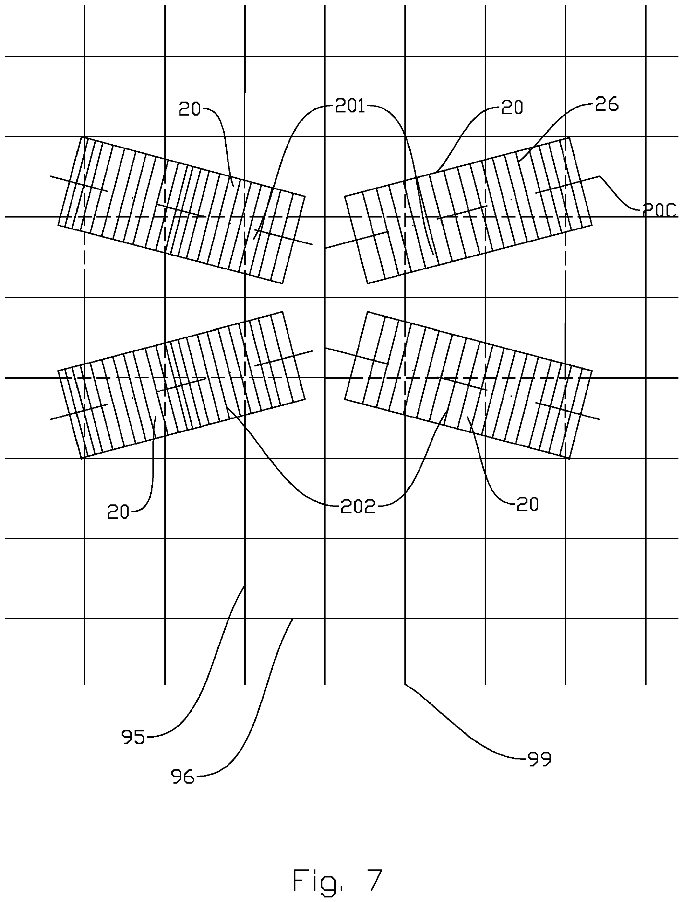

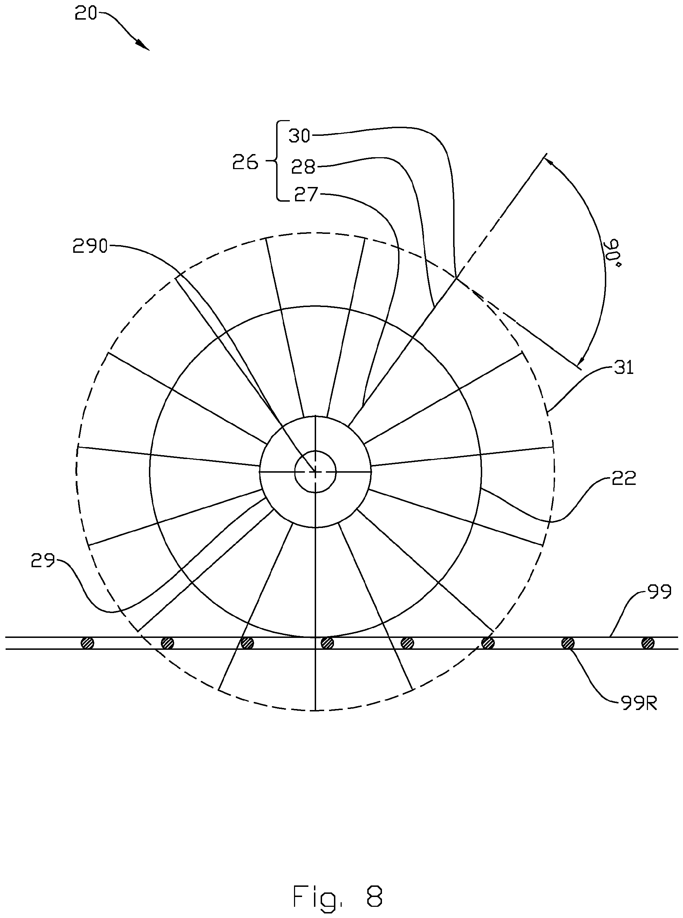

Figure 7 shows the four brushes 20 of figure 8 arranged in an X-shape.

Figure 8 shows a principle drawing of the rotatable brush 20 provided with a straight bristle 26, a brush core 29 and a centre axis 290 in accordance with the prior art. The straight bristle 26 includes a straight attachment portion 27 and a straight free end portion 28. The straight attachment portion 27 is radially attached to the brush core 29. The straight free end portion 28 is arranged radially relative to the brush core 29 and forms a circumferential path 31 around the centre axis 290. The free end portion 28 forms a secant angle α equal to 90 degrees with the circumferential path 31. The straight free end portion 28 is arranged to penetrate the net 99 when the rotatable brush 20 is rolling along the net 99. The working depth of the rotatable brush 20 is restricted by a depth wheel 22 arranged on the brush core 29. The depth wheel 22 may be replaced with a depth wheel of a larger or smaller diameter.

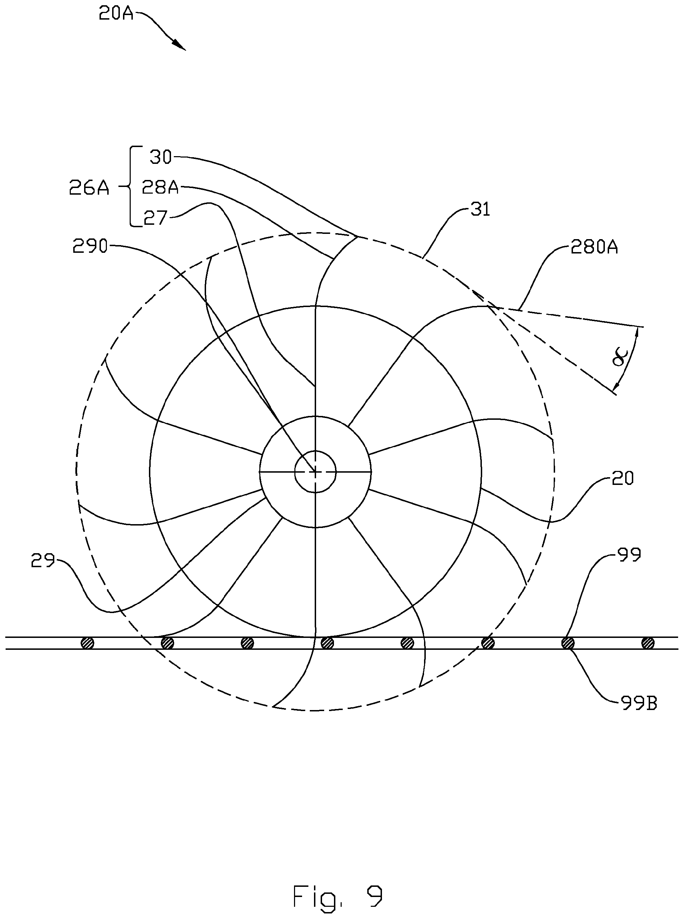

Figure 9 shows a principle drawing of a second rotatable brush 20A provided with a bent bristle 26A. The bent bristle 26A comprises a straight attachment portion 27 and a bent free end portion 28A. The straight attachment portion 27 is radially attached to the brush core 29. The bent free end portion 28A has a deviating direction relative to the straight attachment portion 27 of the bristle 26A, a straight extension 280A from the end 30 of the bristle forming a secant angle α which is different from 90 degrees with the circumferential path 31. The bristle 26A is shown with a secant angle α of approximately 30 degrees. When the rotatable brush 20 is rolling on the net wall 99, the bent free end portion 28A will contribute to the back 99B of the net wall 99 being cleaned as well.

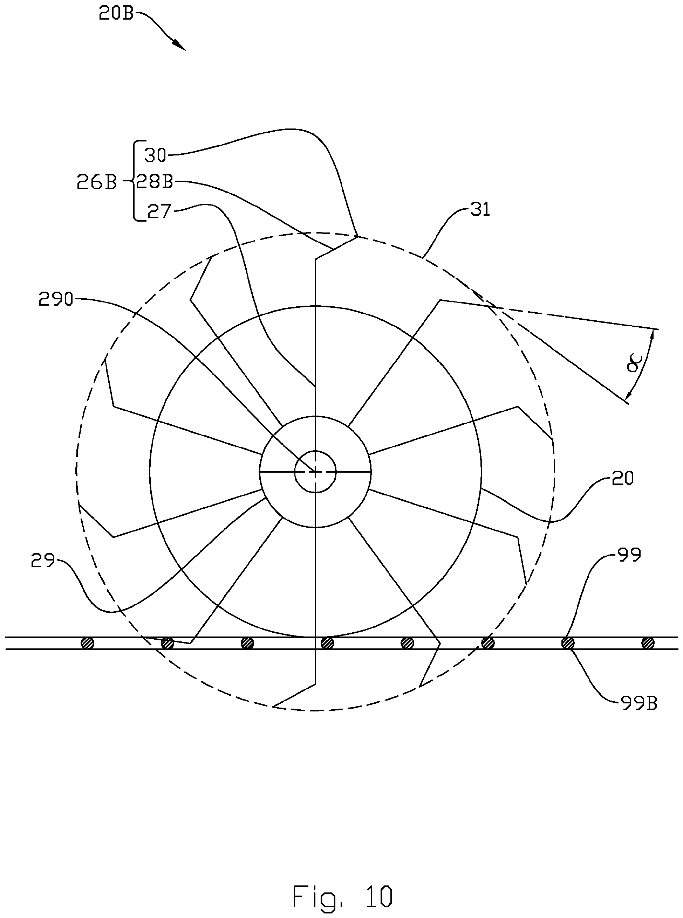

Figure 10 shows a principle drawing of a third rotatable brush 20B provided with a kinked bristle 26B. The kinked bristle 26B includes a straight free end portion 28B with a secant angle α which is equal to the secant angle α of the first bristle 26A shown in figure 9. Otherwise, the third rotatable brush 20B has the same characteristics as the second rotatable brush 20A shown in figure 9.

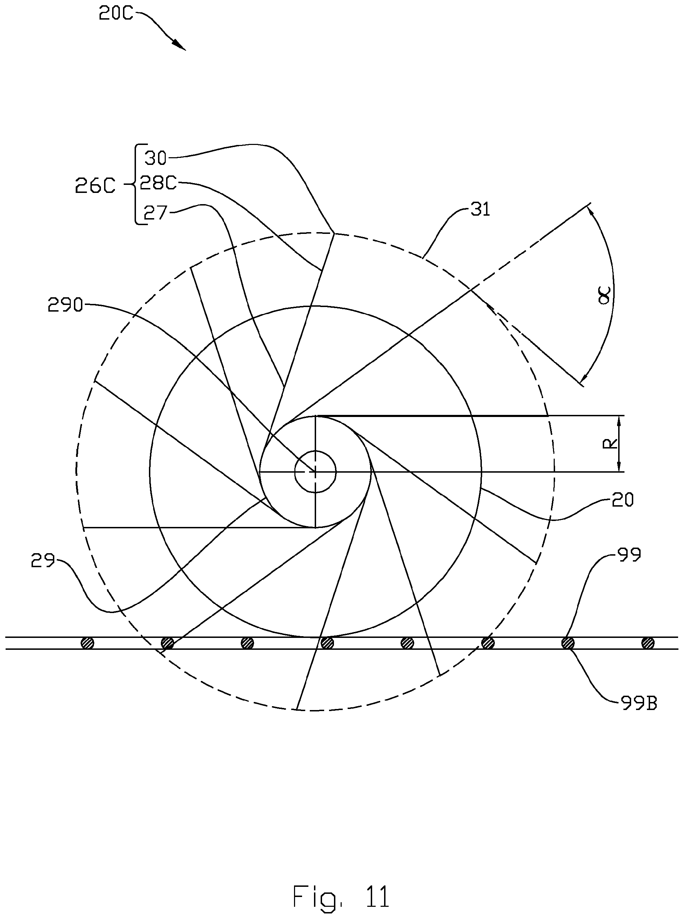

Figure 11 shows a principle drawing of a fourth rotatable brush 20C provided with a straight bristle 26C tangentially attached to the brush core 29. By the straight bristle 26C being arranged tangentially as shown in figure 11, the end portion 28C of the straight bristle 26C forms a secant angle α with the circumferential path 31 that is different from 90 degrees. The secant angle α is shown as an angle of 77 degrees. The secant angle α can be reduced by increasing the radial distance R between the rotational axis 290 and the attachment portion 27 of the bristle. The secant angle α can be increased by reducing the radial distance R.

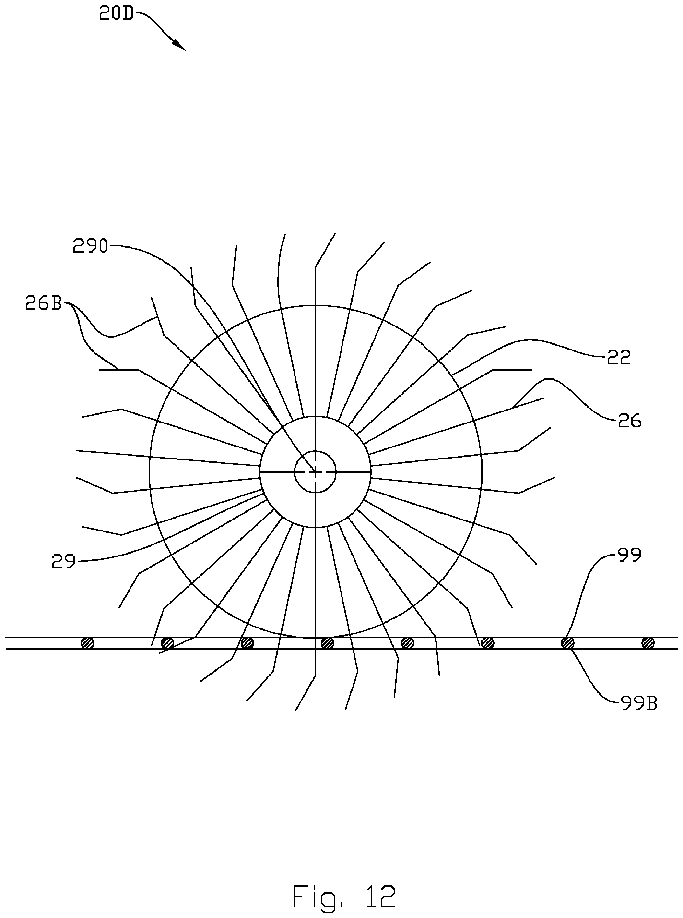

Figure 12 shows a principle drawing of a fifth rotatable brush 20D provided with a plurality of straight bristles 26 and a plurality of bent bristles 26B. The bent bristles 26B are arranged in two opposite directions to give the same cleaning effect independently of the direction of rotation of the brush 20D.

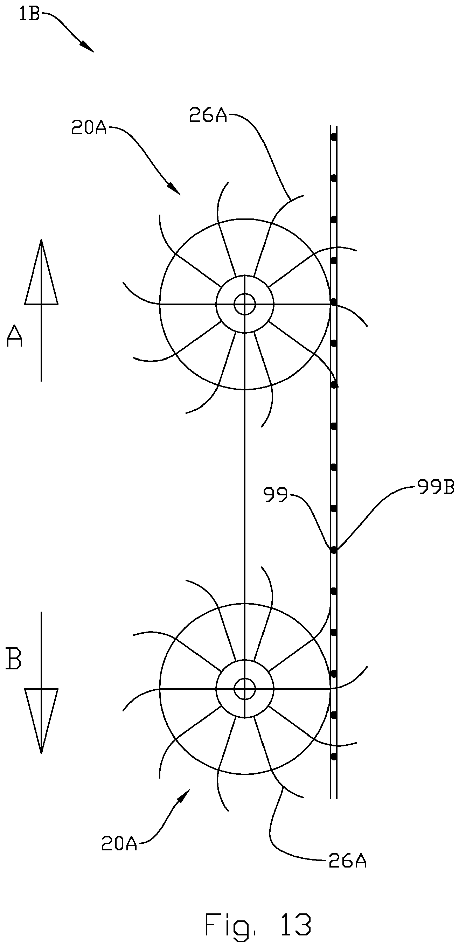

Figure 13 shows, on a smaller scale, a principle drawing of an alternative embodiment of the cleaning device 1B with two rotatable brushes 20A provided with bent bristles 26A.

The two rotatable brushes 20A are laterally inverted relative to each other so that the cleaning effect will be the same independently of whether the cleaning device 1B is moved in a direction A or in a direction B.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

## Claims

1. A rotatable brush (20A-B, D) for cleaning a submerged net (99) where the rotatable brush (20A-A, D) comprises;
- a brush core (29) with a rotational axis (290); and
- a plurality of bristles (26A-B), where each bristle (26A-B) is provided with an end portion comprising a free end (30) and an opposite attachment portion (27) attached to the brush core (29),
where a rotation of the rotatable brush (20A-B, D) moves each bristle's (26A-B) free end (30) along a circular circumferential path (31) with a centre in the rotational axis (290), the end portion of each bristle (26A-B) forms a secant angle (α) with the circumferential path (31), the secant angle (α) being different from 90 degrees, **characterized in that** each bristle (26A-B) at the end portion is formed with a kink or a bend.

2. The rotatable brush (20A-B, D) according to claim 1, wherein the attachment portion (27) is arranged radially in the brush core (29).

3. The rotatable brush (20A-B, D) according to any one of the preceding claims,
wherein the rotatable brush (20A-B, D) is cylindrically shaped around the rotational axis (290).

4. The rotatable brush (20A-B, D) according to any one of the preceding claims,
wherein the rotatable brush (20A-B, D) comprises bristles (26, 26A-B) of different types.

5. The rotatable brush (20A- B, D) according to any one of the preceding claims,
wherein the rotatable brush (20A-B, D) comprises at least one depth wheel.

6. The rotatable brush (20A-B, D) according to any one of the preceding claims,
wherein the rotatable brush (20A-B, D) comprises a middle portion with an attachment for pivotable attachment of the brush to a cleaning device (1A) for rotation of the rotational axis (290).

7. A cleaning device (1A-B) for a submerged net (99), wherein the cleaning device (1A-B) comprises a rotatable brush (20A-B, D) according to any one of the preceding claims.

## Patentansprüche

1. Drehbare Bürste (20A-B, D) zum Reinigen eines untergetauchten Netzes (99), wobei die drehbare Bürste (20A-A, D) Folgendes umfasst;
- einen Bürstenkern (29) mit einer Drehachse (290); und
- eine Vielzahl von Borsten (26A-B), wobei jede Borste (26A-B) mit einem Endabschnitt bereitgestellt ist, der ein freies Ende (30) und einen gegenüberliegenden Befestigungsabschnitt (27) umfasst, der am Bürstenkern (29) befestigt ist,
wobei eine Drehung der drehbaren Bürste (20A-B, D) das freie Ende (30) jeder Borste (26A-B) entlang eines kreisförmigen Umfangspfads (31) mit einer Mitte in der Drehachse (290) bewegt, wobei der Endabschnitt jeder Borste (26A-B) mit dem Umfangspfad (31) einen Sekantenwinkel (a) bildet, wobei der Sekantenwinkel (a) von 90 Grad verschieden ist, **dadurch gekennzeichnet, dass** jede Borste (26A-B) am Endabschnitt mit einem Knick oder einer Biegung ausgebildet ist.

2. Drehbare Bürste (20A-B, D) nach Anspruch 1, wobei der Befestigungsabschnitt (27) radial im Bürstenkern (29) angeordnet ist.

3. Drehbare Bürste (20A-B, D) nach einem der vorstehenden Ansprüche, wobei die drehbare Bürste (20A-B, D) um die Drehachse (290) herum zylindrisch geformt ist.

4. Drehbare Bürste (20A-B, D) nach einem der vorstehenden Ansprüche, wobei die drehbare Bürste (20A-B, D) Borsten (26, 26A-B) unterschiedlichen Typs umfasst.

5. Drehbare Bürste (20A-B, D) nach einem der vorstehenden Ansprüche, wobei die drehbare Bürste (20A-B, D) mindestens ein Stützrad umfasst.

6. Drehbare Bürste (20A-B, D) nach einem der vorstehenden Ansprüche, wobei die drehbare Bürste (20A-B, D) einen Mittelabschnitt mit einer Befestigung zur schwenkbaren Befestigung der Bürste an einer Reinigungsvorrichtung (1A) zur Drehung der Drehachse (290) umfasst.

7. Reinigungsvorrichtung (1A-B) für ein untergetauchtes Netz (99), wobei die Reinigungsvorrichtung (1A-B) eine drehbare Bürste (20A-B, D) nach einem der vorstehenden Ansprüche umfasst.

## Revendications

1. Brosse rotative (20A-B, D) pour nettoyer un filet (99) immergé où la brosse rotative (20A-A, D) comprend ;
- un coeur (29) de brosse avec un axe de rotation (290) ; et
- une pluralité de poils (26A-B), où chaque poil (26A-B) est muni d'une portion d'extrémité comprenant une extrémité libre (30) et une portion de fixation (27) opposée fixée au coeur (29) de brosse,
où une rotation de la brosse rotative (20A-B, D) déplace chaque extrémité libre (30) de poil (26A-B) le long d'un trajet circonférentiel (31) circulaire avec un centre dans l'axe de rotation (290), la portion d'extrémité de chaque poil (26A-B) forme un angle sécant (α) avec le trajet circonférentiel (31), l'angle sécant (α) étant différent de 90 degrés, **caractérisé en ce que** chaque poil (26A-B) au niveau de la portion d'extrémité est formé avec un coude ou un pli.

2. Brosse rotative (20A-B, D) selon la revendication 1, dans laquelle la portion de fixation (27) est agencée radialement dans le coeur (29) de brosse.

3. Brosse rotative (20A-B, D) selon l'une quelconque des revendications précédentes, dans laquelle la brosse rotative (20A-B, D) est façonnée cylindriquement autour de l'axe de rotation (290).

4. Brosse rotative (20A-B, D) selon l'une quelconque des revendications précédentes, dans laquelle la brosse rotative (20A-B, D) comprend des poils (26, 26A-B) de différents types.

5. Brosse rotative (20A-B, D) selon l'une quelconque des revendications précédentes, dans laquelle la brosse rotative (20A-B, D) comprend au moins une roue de profondeur.

6. Brosse rotative (20A-B, D) selon l'une quelconque des revendications précédentes, dans laquelle la brosse rotative (20A-B, D) comprend une portion centrale avec une fixation pour la fixation pivotante de la brosse à un dispositif de nettoyage (1A) pour la rotation de l'axe de rotation (290).

7. Dispositif de nettoyage (1A-B) pour un filet (99) immergé, dans lequel le dispositif de nettoyage (1A-B) comprend une brosse rotative (20A-B, D) selon l'une quelconque des revendications précédentes.
